# EUROPEAN PATENT APPLICATION

(11) **EP 1 441 434 A2**
(43) Date of publication of application: **28.07.2004**
(21) Application number: 04001204.9
(22) Date of filing: 21.01.2004
(51) Int. Cl.: H02K 44/08

(54) **Stand-alone high efficiency magnetohydrodynamic power generation method and system**

(30) Priority: 21.01.2003 JP 2003012133
(71) Applicant: HOKKAIDO UNIVERSITY, Sapporo City Hokkaido (JP)
(72) Inventor: Kayukawa, Naoyuki, Sapporo City Hokkaido (JP); Wang, Yongming, Sapporo City Hokkaido (JP)
(74) Representative: von Hellfeld, Axel, Dr. Dipl.-Phys.

(57) **Abstract**

An MHD stand-alone high efficiency power generation method comprises following three steps; a thermo-chemical coal gasification step in which waste heat of exhaust gas from an MHD generator 1b of an MHD power generation apparatus 1 is converted into chemical energy of coal syngas by a coal gasification process in the furnace 2; a pre-heating step in which the waste heat of the exhaust gas through the coal gasification furnace 2 is recovered as a sensible heat of a coal syngas and hydrogen mixture by heat exchange in the pre-heater 3; and an iodine - sulfur reaction step in which the waste heat of the exhaust gas through the fuel pre-heater is converted into hydrogen energy by splitting water in the IS system 4.
By means of the said three steps, the high temperature waste heat from the MHD generator 1b is regenerated as the sensible heat of the fuel mixture and the fuel chemical energy. The method further comprises a step in which the regenerated energy is re-circulated to a combustor 1a of the MHD power generation apparatus 1, and the fuel consisting of the syngas produced in the gasification furnace and the hydrogen produced in the iodine - sulfur unit is combusted with pure oxygen. As a result, a high efficiency power generation system with no carbon dioxide emission capability can be designed by using an MHD stand-alone unit, and using coal resource as the primary fuel.

## Description

### BACKGROUND OF THE INVENTION

### Field of the Invention

This invention relates to a method and a system for an MHD (Magneto-Hydro-Dynamics) power generation, in which coal is used as a power generation source and a combustion plasma of the coal syngas and hydrogen mixture gas is used as an operational fluid. More particularly, the present invention relates to a method and a system for generating a power with high efficiency by a stand-alone MHD power generating apparatus.

### Description of the Related Art

The MHD power generation apparatus generates electric power by sending combustion plasmas produced in a combustor to an MHD generator channel under a magnetic field applied at right angle to the fluid motion.
The MHD generator is an electromagnetic heat engine that works at the highest temperature using the combustion plasma as the working fluid. Since the fluid must be electrically conductive, the lower limit of its operational temperature is about 2000°C. Thus, in order to achieve an effective utilization of the heat of 2000°C or less exhausted from the MHD generator, the design concept of the conventional MHD power generation systems is based on an "MHD-Steam Combined Cycle" , in which a steam turbine bottoming cycle is used together with the MHD topping cycle.

Also, in the conventional MHD power generation system, the combustion is mainly carried out by using air as the oxidant for the combusting process. Then, in order to attain high combustion temperatures, air is preheated by waste heat from the MHD power generation apparatus. The conventional MHD power generation system basically uses the energy flow schematics, where a part of the waste heat from the MHD power generation apparatus is again re-circulated as the sensible heat of the preheated air to the combustor, and the remaining part of the waste heat is used to generate steam to operate the steam cycle, where a part of the steam heat is converted to the electrical power.

However, the above-mentioned cycle has the following problems. Firstly, because of the attainable efficiency limit of the steam cycle, a half or more of the steam energy is uselessly discharged to the cooling water in the steam cycle. Secondly, since the energy of the pre-heated air re-circulated to the combustor of the MHD power generation apparatus is insufficient to obtain the high combustion temperatures, an adequate oxygen enrichment is required. Consequently, the entire efficiency to be expected is only 50 to 55%. Thirdly, since the air combustion results in a large number of nitrogen oxides in the combustion products, an appropriate countermeasure for NOₓ reduction is required, and the separation and recovery of the carbon dioxide becomes difficult.

Moreover, the conventional coal combustion-type MHD power generation system employs the method of direct combustion of pulverized coal with oxygen-enriched air. In this case, the following problems further arise.
The fact that the thermal radiation loss of solid coal ash particles is considerable, causes drops in the temperature as well as the electrical conductivity of the coal combustion plasma. This means that the power output per unit volume plasma is low, and, therefore, a large MHD generator volume is required to attain a large scale power output, which yields economical risks. Furthermore, melted coal slag is deposited on walls of the MHD power generation apparatus. This fact extremely reduces the durability of the generator walls.

### SUMMARY OF THE INVENTION

It is therefore an object of the present invention to provide a stand-alone MHD power generation system, that even with using coal, solves the above-mentioned various problems that are encountered in the conventional MHD power generation systems. The invention aims to attain the complete recovery of the carbon dioxide as liquefied CO₂, and to attain higher efficiencies than the conventional MHD power generation systems and any other gas-turbine combined power generation systems.

In order to achieve above-mentioned objects, a high efficiency power generation method with a stand-alone MHD generator is invented on the basis of three sequential heat regeneration steps for the regeneration of the high temperature waste heat from an MHD generator of an MHD power generation apparatus as sensible heat of fuel and chemical energies. The first step is a thermo-chemical coal gasification in which the waste heat of the exhaust gas from said MHD generator is converted into chemical energy of coal syngas by endothermic gasification reaction with using the combustion products exhausted from the MHD apparatus as the oxidizer of the carbon in coal. The second step is a fuel pre-heating process in which the waste heat of said exhaust gas from the said gasification furnace is recovered as the sensible heat of the gaseous fuel mixture consisting of coal syngas and hydrogen, by means of direct contact of the fuel mixture with heated elements of a ceramic-pile-type pre-heater. The third step is a regeneration process performed by sequential reactions in an iodine-sulfur system in which the waste heat of said exhaust gas coming out from said fuel pre-heater is converted into chemical energy of hydrogen by an iodine - sulfur water splitting reaction. The stand-alone MHD high efficiency power generation method according to the present invention further comprises a re-circulating step in which the recovered sensible heat and chemical energies are re-circulated to the combustor of said MHD power generation apparatus, where said fuel mixture is combusted with pure oxygen.

An MHD stand-alone high efficiency power generation system in accordance with the present invention comprises: an MHD power generation apparatus consisting of a combustor for combusting a mixture fuel of hydrogen and CO₂-free coal syngas with pure oxygen, and an MHD generator for producing electric power from the heat of the combustion plasma; a coal gasification furnace for conversion of coal and water into a mixture of coal syngas consisting of carbon monoxide and hydrogen, carbon dioxide and gaseous steam, with using an appropriate fraction of the waste heat of high temperature exhaust gas from the said MHD generator apparatus; a fuel pre-heater for pre-heating the carbon monoxide and hydrogen mixture fuel coming from the downstream, with the use of the high temperature gas, which is a mixture of said gaseous mixture out of the coal gasification furnace and the MHD exhaust gas which is bypassed the furnace; an iodine - sulfur reaction system for decomposing water into hydrogen and oxygen. The hydrogen is mixed with the CO₂-free coal syngas sent from the CO₂/fuel separator system in the downstream. The oxygen is sent to the combustor and is used as a part of the combustion oxidizer. The iodine - sulfur reaction system is operated with the waste heat of the gas mixture coming out from the fuel pre-heater; and a carbon dioxide/fuel separator where the carbon dioxide is liquefied and removed from the syngas consisting of carbon monoxide and hydrogen. The separation between carbon dioxide and syngas is performed by means of an isothermal compression and an adiabatic expansion processes adapted to the mixture syngas, which is exhausted from the iodine - sulfur reaction unit and passed through a filter in which solid potassium sulfate and water are removed. The coal syngas thus obtained does not contain carbon dioxide, and is sent to the pre-heater together with hydrogen produced in the iodine-sulfur system.

In the MHD stand-alone high efficiency power generation system in accordance with the present invention, the CO₂-free syngas sent from the CO₂/fuel separator is pre-heated by waste heat of the iodine -sulfur reaction unit prior to the mixing with the hydrogen product of the iodine-sulfur system. This constitution is preferable for achievement of higher total efficiency.

### BRIEF DESCRIPTION OF THE DRAWINGS

Fig. 1 is the system configuration view showing an embodiment of the MHD stand-alone high efficiency power generation system in accordance with the present invention.
Fig. 2 is the view showing the relationship between the MHD generator efficiency and the total efficiency of the MHD stand-alone power generation system of the above-mentioned embodiment.

### DETAILED DESCRIPTION OF THE PREFERRED EMBODIMENT

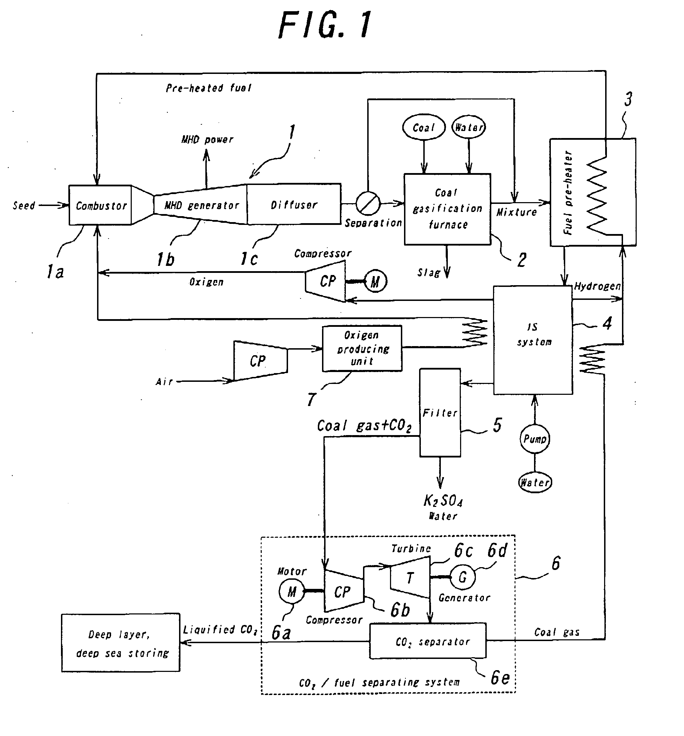

A preferred embodiment in accordance with the present invention is described below in detail with reference to the accompanying drawings.
The MHD power generation system of the above-mentioned embodiment shown in Fig. 1 comprises main members; an MHD power generation apparatus 1 consisting of a combustor 1a, an MHD generator 1b and a diffuser 1c; a water injection type high temperature coal gasification furnace 2, a heat accumulation-type fuel pre-heater 3; an IS system 4 serving as an iodine - sulfur reaction unit; a filter 5; a compression - expansion type CO₂/fuel separation system 6 serving as a carbon dioxide/fuel separation unit; and an oxygen producing unit 7.

In the MHD power generation system of this embodiment, the coal syngas fuel is separated from the carbon dioxide by the CO₂/fuel separation system 6. The main components of the coal syngas are carbon monoxide and hydrogen, of which CO to H₂ volume ratio is about 2:1. The CO₂-free syngas is mixed with the hydrogen produced in the IS system 4 by decomposition of water, and passed through the heat accumulation-type fuel pre-heater 3 and heated to about 2000°C, then supplied to the combustor 1a of the MHD power generation apparatus 1. The oxygen for the combustion in the combustor 1a is supplied from the product of the IS system 4 and the air separation-type oxygen unit 7.

The MHD power generation method of the above-mentioned embodiment carries out the power generation on the basis of the following steps.
In the combustor 1a of the MHD power generation apparatus 1, the mixture fuel of the coal syngas (the carbon monoxide and the hydrogen), and the IS-hydrogen sent through the heat accumulation-type fuel pre-heater 3 are combusted with pure oxygen. The CO₂-free coal syngas coming out from the CO₂/fuel separation system 6 shown in the lowest stage in Fig. 1 is mixed with the hydrogen produced by the IS system 4 prior to entering the heat accumulation-type fuel pre-heater 3.

Since the MHD power generation is operated with plasmas, a small quantity of potassium carbonate (K₂CO₃) is added as the seed in the combustor 1a in order for the combustion gas be electrically conductive. The seed material is thermally decomposed (dissociated) at the high temperature combustion environment, and the potassium is further ionized, that results in free electrons and potassium ions, and electrically conductive gas.

The combustion plasma produced in the combustor 1a is passed across the externally applied magnetic field through the MHD generator 1b, and thereby, the gaseous heat is directly converted into electricity. The combustion gas (MHD exhaust gas) at high temperatures discharged from the MHD generator 1b recovers its pressure in the diffuser 1c. Here, there are two design options for the heat flow in the diffuser. One is to split some proper quantities to steam cycle by steam generation (not shown). The steam cycle is composed of a steam turbine and a power generator unit driven by the steam turbine. The main purpose of the introduction of the steam cycle is to regulate the combustion temperature under allowable higher limit of the materials. Otherwise, without introducing any other temperature regulation methods, the combustion temperature becomes far beyond the melting temperature of the structural materials of the combustor. Another design principle which is adequate for the combustion temperature regulation is an introduction of the upper limit of the gaseous temperature at about 2100°C at the entrance of the fuel pre-heater. This is accomplished by the introduction of an appropriate amount of the cold gas from the outlet of the iodine- sulfur unit. The former design with the steam cycle provides higher total efficiencies when the MHD generator unit efficiency is lower than about 25%. The latter design with no steam cycle but with temperature constraint at the pre-hcater entrance yields higher efficiencies than the former when the MHD unit efficiency is higher than about 25%.

The MHD exhaust gas sent from the diffuser 1c is divided into two parts, i.e., by a fraction α (a predetermined value) and a fraction (1 - α). The α fraction enters the coal gasification furnace 2, and the other part of the fraction (1 - α) bypasses the coal gasification furnace 2. The reason of this heat split is the followings: The role of the coal gasification furnace 2 is to convert coal into coal syngas to produce gaseous fuel for the slag-free MHD power generation operation, and recover the high temperature MHD waste heat as a chemical energy of the syngas under endothermic gasification reactions, and simultaneously remove the coal ash as liquid slag for the ash-free operation in the downstream steps. Since the amount of supplied coal is defined, the heat absorbed by gasification is definite. Thus, the drop in the gas temperature and the regeneration amount of heat to chemical energy through the gasification stage are definite. Therefore, in order to separate the coal slag at the exit of the furnace 2, the exit temperature must be kept above a melting temperature of the coal ash and below the evaporation temperature of the liquid slag (for example, in the present case 1700 K). This is accomplished by setting an appropriate value for α.

The slag-free mixture gas (CO, H₂, CO₂, H₂O steam and K₂SO₄ vapor) comprised of the excess MHD exhaust gas and the coal syngas, which arc sent out from the coal gasification furnace 2, is mixed with the bypassed MHD exhaust gas of (1-α) fraction, and enters the fuel pre-heater 3. Thereby, the mixed gaseous temperature is higher than 1700 K at the inlet of the fuel pre-heater 3. In the fuel pre-heater 3, a certain amount of heat is transferred from the mixed gas to the CO₂- free syngas and IS-hydrogen mixture, so that the temperature of the mixed gas is further dropped, and the fuel temperature increases. The heated fuel gas is a mixture of CO and H₂, in which H₂ is the sum of the hydrogen produced in the gasification furnace 2 and the hydrogen produced by the decomposition of the water in the IS system 4. The CO and H₂ syngas is sent from the CO₂/fuel separation system 6 located in the downstream. The gas of which temperature is dropped to about 1300 K through the pre-heater finally enters the IS system 4. The heat is further regenerated as the chemical energy of hydrogen via decomposition reactions of water through endothermic sequential reactions between iodine and the sulfur chemicals in the IS system 4. In this stage, the hydrogen produced is equal to the amount of which combustion heat is equal to the heat input to the IS-system times the efficiency of the IS system 4, and the corresponding heat of the MHD waste below about 1300 K is reproduced as the chemical energy of the hydrogen. The oxygen simultaneously produced in the IS system 4 is boosted up to the combustor pressure, and sent to the combustor 1a where the oxygen is used as the oxidizer corresponding to the combustion of the IS-hydrogen.

The mixture gas of the MHD exhaust gas and the coal syngas sent out from the IS system 4 is about 1 atmospheric pressure and equal to or lower than 100°C. The steam contained in the mixture is changed to the liquid phase. Therefore, after exiting the IS-system, liquid water and solid K₂SO₄ can be removed from the gaseous mixture through the filter 5. The potassium sulfate is formed by the reaction between the potassium dissociated from the seed material (K₂CO₃) and the sulfur contained in coal. The reaction occurs under the temperature above 1340 K in the downstream of the gasification furnace 2.
The potassium sulfate is in gaseous and/or liquid phase when the temperature is higher than about 1340 K, and it becomes liquid and/or solid during the IS-process. After passing through the filter 5, the mixture gas (CO, H₂ and CO₂) is boosted up to about 50 atmospheric pressures under a constant temperature in its original gaseous phase (as an ideal course) by a compressor (CP) 6b driven by a motor (M) 6a in the CO₂/fuel separation system 6, and, then, adiabatically expands to about 10 atmospheric pressure through a turbine (T) 6c, where its temperature is dropped to about 224 K. A turbine outlet temperature (224 K) at this time is below the liquefied temperature of CO₂. On the other hand, the temperature is higher than the liquefied temperatures of the CO and the H₂. Thus, the CO₂ is separated in a liquid state from the gaseous components in a CO₂ separator 6e, and then may be stored in deep ground layer or in deep sea.

The coal syngas fuel (CO and H₂) sent out from the CO₂/fuel separation system 6 is preheated from 224 K to a temperature close to a room temperature by the waste heat of the IS system 4. Then, after being mixed with the IS-hydrogen, the syngas and IS-hydrogen fuel mixture is returned to the combustor 1a of the MHD power generation apparatus 1 through the fuel pre-heatcr 3, and combusted with the oxygen. There arc two reasons for the use of pure oxygen. The combustion products of the syngas with oxygen are mainly CO₂ and the H₂O, that are the most appropriate oxidants for the coal gasification of the thermal decomposition type at high temperatures. The second reason is to provide an easy CO₂ separation and recovery capability with low power consumption.

The devices and units constituting the MHD power generation system in this embodiment and the steps can be embodied at the current technical level, and they do not require any performances or new processes that require technological breakthrough. That is; in regard to the MHD power generation apparatus 1, there are many technological results and experiences in the past, such as not only the design and the construction planning of the natural gas combustion type 500,000 KW MHD - steam power plant in the former Soviet Union, but also the R & D results achieved in the the US DOE's MHD power generation Proof-Of-Concept program including the development of 50,000 KW coal combustor, an MHD generator channel of 1500 KW nominal electrical output with a 1000 hr lifetime, and many kinds of downstream components being adaptable to the high temperature coal combustion gas stream environment with slag. Also, in regard to the high temperature coal gasification processes, the researches related to the development of a coal gasification gas turbine combined cycles (IGCC) that arc presently carried out in many developed countries, may provide valuable databases for the exploitation of the present invention. With regard to the heat accumulation type fuel pre-heater 3, although there was no experience with the coal syngas in the past, the result and long time durability of the 2000 K air pre-heater of the heat accumulation-type developed in the MHD power generation research project in the former Soviet Union may provide a reliable database for the design of the CO and H₂ fuel pre-heater for the present invention. Also, with regard to the IS process of the IS system 4, there is no past example that it is incorporated with the MHD power generation system. However, the development research for hydrogen production purpose by the IS-process with heat utilization of a high temperature gas cooled nuclear reactor is currently carried out in the Japan Atomic Energy Research Institute. Since the IS process heat is can be supplied by any other heat source, and a sufficient amount of heat can be converted to hydrogen chemical energy, it is the process having a high potential of practical implementation for a large scale MHD stand-alone power generation plant.

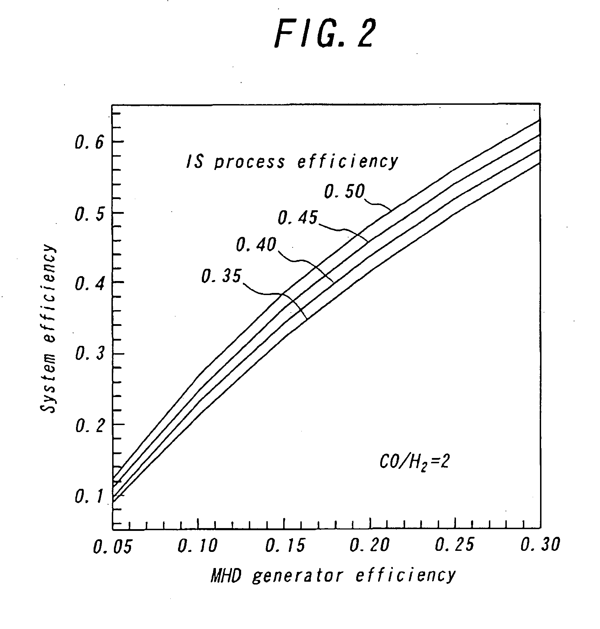

A system efficiency shown in Fig. 2 is calculated under the assumption that an efficiency of the MHD generator 1b is 5 to 30 % (0.05 to 0.30) and an efficiency of the IS process in the IS system 4 is 35 to 50 % (0.35 to 0.50). With regard to the efficiency of the MHD generator 1b, the design value of 24.5% of the U-500 power generation plant in the former Soviet Union is the highest value so far expected for a practical plant. Therefore, 30 % efficiency assumed in the calculation may be the possible maximum value in the practical design. Also, in regard to the efficiency of the IS process, an experimental value of 49 % is reported, and a higher efficiency will be expected in the future. As for the oxygen producing power, it is referred to the current commercial value.

Since there is no actual example with regard to the process of the CO₂/ fuel separation system 6 for liquefying and recovering the carbon dioxide, here, the following process is newly assumed: The mixture gas of the CO₂ and the coal syngas (CO and H₂) from which the water and the solid particles (the potassium sulfate K₂SO₄) are removed through the filter 5 is firstly boosted up to 50 atmospheric pressures from 1 atmospheric pressure under a constant temperature (82°C) by the compressor 6b. Then, it is adiabatically expanded to 10 atmospheric pressures from 50 atmospheric pressures by the pressure turbine 6c. Consequently, the temperature of the mixture gas becomes - 49°C, which is below the liquefied temperature - 39°C of the carbon dioxide at 10 atmospheric pressures. Then, the carbon dioxide is liquefied at the end of the turbine process, and separated in a liquid state from the coal syngas in a gaseous state. Because the carbon monoxide and the hydrogen are in a gaseous state at this temperature and pressure, it continues to be expanded. Then, the electric power corresponding to the pressure drop is extracted from a turbo-generator 6d coupled with the turbine 6c on the same shaft. For this reason, in the system of this embodiment, the liquefied CO₂ separation can be performed with relatively low power consumption. The mentioned process can be attained by the system in which the combustion process in the combustor 1a is carried out by the combustion of coal syngas with pure oxygen.

Thus, according to the MHD power generation method and the MHD power generation system in this embodiment, the power generation system is configured by the stand-alone MHD unit without using the steam cycle as the major bottoming cycle. Thus, there is no case in the MHD stand-alone system of this embodiment that a half or more of the exhaust energy of the topping cycle is uselessly discharged to the cooling water in the steam cycle. Also, because of high fraction of re-circulation energy to the combustor 1a of the MHD power generation apparatus 1, it is possible to obtain the entire efficiency exceeding 60 %. Moreover, due to the pure oxygen combustion, the combustion product does not contain the nitrogen oxide. Hence, the NOx countermeasure is not required, and the separation of the carbon dioxide can easily be attained by the dual compression and expansion processes claimed in [0022]. Also, the desulfurization of the coal sulfur can be automatically achieved by the chemical interaction with the seed potassium along the change in temperatures in the devices located downstream of the gasification furnace.

Moreover, according to the MHD power generation method and the MHD power generation system in this embodiment, the coal syngas is combusted with pure oxygen. Thus, there is no thermal radiation loss caused by the solid coal ash particles. The thermal radiation loss is unavoidable in the direct coal combustion schematics because the slag is vaporized under the required temperatures. This is one of the causes of poor performances of the conventional MHD systems. In the systems of the present invention, however, the combustion gas temperature as well as the electrical conductivity can be sufficiently high, so that a high electrical power density per unit plasma volume is attained even in a small MHD generator. This means a large output power generation with increasing the economical predominance. Also, there is no case that the melted coal ash is deposited on the generator walls of the components consisting of the MHD apparatus 1. The slag-free schematics may result in extreme durability of the wall materials of the MHD power generation apparatus.

As mentioned above, the embodiment has been described with reference to the illustrated examples. However, the present invention is not limited to the above-mentioned examples. Various modifications can be suitably made within the range noted in claims.

According to the MHD power generation method and the MHD power generation system of the present invention, even with use of coal resource, it is possible to solve various problems described so far that are unavoidably encountered in the conventional MHD power generation systems of the direct coal combustion-type. With the use of the method and the system of the present invention, it is also possible to achieve perfect CO₂ liquefaction and recovery. The method and the system can provide higher efficiencies than the conventional type MHD power generation systems, and any other combined power generation systems operated by coal, and/or coal syngas.

The expected effects of the MHD power generation method and the MHD power generation system in the present invention are as follows:
(1) As effects in the energy science and technology, it is possible to result in progresses in the oxygen combustion technique, the clean coal technology, the hydrogen production technology, and the gas separation technology.
(2) As an economical viewpoint, the construction cost and the cost of electricity can be largely reduced in comparison with those of the conventional combined power generation system due to schematics of a stand-alone device, removal of specific components for NOₓ decomposition and SOₓ desulfurization, low power CO₂ separation, and high efficiency system efficiency.
(3) As social and environmental effects, it is possible to achieve considerable reduction in environmental loads, the progress in the countermeasure technology for the global warming, the resource saving effect, and the energy security in long stable reservation of the energy by the utilization of coal in abundance.

## Claims

1. A method for generating a power with high efficiency by a stand-alone MHD power generation apparatus, comprising the steps of:
(a) regenerating high temperature waste heat from an MHD generator of said MHD power generation apparatus as sensible heat of fuel and chemical energy, wherein the step of regenerating high temperature waste heat includes the three steps of:
a thermo-chemical coal gasification step in which the waste heat of the exhaust gas from said MHD generator is converted into chemical energy of coal syngas by a coal gasification furnace;
a pre-heating step in which the waste heat of said exhaust gas through said coal gasification furnace is recovered as sensible heat of coal syngas and hydrogen mixture by a fuel pre-heater; and
an iodine - sulfur reaction step in which the waste heat of said exhaust gas through said fuel pre-heater is converted into hydrogen chemical energy by iodine - sulfur reactions, and
(b) re-circulating the regenerated energy to a combustor of said MHD power generation apparatus, and said fuel of the coal syngas and hydrogen is combusted with pure oxygen.

2. A system for generating a power with high efficiency by a stand-alone MHD power generation apparatus comprising:
an MHD power generation apparatus having a combustor for combusting a pre-heated CO₂-free mixture fuel of hydrogen and coal syngas with pure oxygen, and an MHD generator for producing electric power with combustion plasma as an operational fluid, which is produced in said combustor;
a coal gasification furnace for converting coal and water into a mixture of coal syngas, carbon dioxide and steam with the use of the high temperature waste heat from said MHD generator;
a fuel pre-heater for pre-heating said mixture fuel, with the waste heat of the high temperature mixture of coal syngas, carbon dioxide and steam from said coal gasification furnace, and the high temperature MHD exhaust gas which bypassed the coal gasification furnace;
an iodine - sulfur reaction unit operated with waste heat of said fuel pre-heater for decomposing the water into hydrogen and oxygen by sequential reactions between iodine and sulfur chemicals, wherein the hydrogen is mixed with CO₂-free coal syngas sent from a CO₂/fuel separator, while the oxygen is sent to said combustor, and is used as a part of the necessary oxidizer; and
a carbon dioxide/fuel separator for liquefaction of the carbon dioxide by means of isothermal compression and adiabatic expansion, and removal of liquid carbon dioxide from the mixture coal syngas exhausted from said iodine - sulfur reaction unit after being passed through a filter for removal of water and solid potassium sulfate.

3. The MHD stand-alone high efficiency power generation system according to claim 2 **characterized by** pre-heating of said carbon dioxide-free coal syngas prior to be mixed with the hydrogen produced in the iodine - sulfur reaction unit, with the waste heat of the mixture coal syngas from said iodine - sulfur reaction unit.
